# EUROPÄISCHE PATENTSCHRIFT

(11) **EP 2 331 402 B1**
(45) Veröffentlichungstag und Bekanntmachung des Hinweises auf die Patenterteilung: **05.09.2012**
(21) Anmeldenummer: 09736182.8
(22) Anmeldetag: 07.10.2009
(51) Int. Cl.: B64D 11/00

(54) **VORRICHTUNG ZUR AUFNAHME VON GEPÄCK IN EINER PASSAGIERKABINE EINES FLUGZEUGES**
DEVICE FOR HOLDING LUGGAGE IN A PASSENGER CABIN OF AN AIRCRAFT
DISPOSITIF DESTINÉ À RECEVOIR DES BAGAGES DANS LA CABINE DES PASSAGERS D'UN AVION

(30) Priorität: 10.10.2008 DE 102008051240; 10.10.2008 US 195817 P
(43) Veröffentlichungstag der Anmeldung: 15.06.2011
(73) Patentinhaber: Airbus Operations GmbH, 21129 Hamburg (DE)
(72) Erfinder: SCHNEIDER, Uwe, 21635 Jork Königreich (DE); EHLERS, Bernd, 20144 Hamburg (DE)
(74) Vertreter: Maiwald Patentanwalts GmbH
(86) Internationale Anmeldenummer: PCT/EP2009/063035
(87) Internationale Veröffentlichungsnummer: WO 2010/040776

(56) Entgegenhaltungen:
- EP-A1- 0 594 997
- EP-A1- 1 216 920
- US-A- 5 921 029
- US-A1- 2006 132 007
- US-A1- 2008 078 871

## Beschreibung

### Bezug auf Zugehörig Anmeldungen

Die vorliegende Anmeldung beansprucht die Priorität der US Provisional Patentanmeldung Nr. 61/195,817, eingereicht am 10. Oktober 2008 und der deutschen Patentanmeldung Nr. 10 2008 051 240.0, eingereicht am 10. Oktober 2008.

### Gebiet der Erfindung

Die Erfindung betrifft eine Gepäckablage, die auch als Hatrack bezeichnet wird. Diese insbesondere für Passagierkabinen in Flugzeugen bestimmte, zumindest ein Gehäuse umfassende Gepäckablage ist oberhalb von Sitzreihen beweglich angeordnet und an einer flugzeugfesten Struktur befestigt. Die vorliegende Erfindung ist weiterhin auch auf Gepäckablagen in anderen Transportmitteln übertragbar, wie beispielsweise schienengebundene Fahrzeuge, vorzugsweise Hochgeschwindigkeitszüge oder Autobusse.

### Technologischer Hintergrund

In Passagierkabinen von Flugzeugen werden über den Sitzreihen Verstaufächer bereitgestellt zur Aufbewahrung des Handgepäcks von Passagieren während des Fluges. Derartige Gepäckablagen sind so integrierbar, dass einerseits die Bewegungsfreiheit der Passagiere nicht eingeschränkt wird und andererseits diese Verstaufächer zur Entnahme und Ablage von Gepäck bequem zu erreichen sind. Die Gestaltung, Anordnung und Handhabung der Gepäckablage, die auch als Hatrack, Fix or move-Bin oder Overhead Stowage Compartment (OHSC) bezeichnet wird, ist auch ein das Wohlbefinden der Passagiere bestimmendes Komfortmerkmal der Passagierkabine. Überkopf-Gepäckablagen in Flugzeugen sind insbesondere während der Start- und Lande-Phase sowie bei Notfällen sehr hohen mechanischen Belastungen ausgesetzt und müssen daher für die Luftfahrt verbindliche

Sicherheitsstandards hinsichtlich der Dauerfestigkeit und des Crash-Verhaltens erfüllen.

Der Aufbau herkömmlicher Gepäckablagen umfasst häufig ein starres Gehäuse einschließlich eines fixierten Bodens sowie eine nach oben zu öffnende Klappe. Diesen Ausführungsformen ist ein beschwerliches Verstauen und Entnehmen von Gepäckstücken gemeinsam, aufgrund beengter räumlicher Verhältnisse und der begrenzten Zugänglichkeit der Gepäckablage durch die vergleichsweise hohe Positionierung. Insbesondere für kleine Personen besteht daher die Schwierigkeit, das Gepäck zu entnehmen. Weiterhin fehlt diesen Gepäckablagen eine in das Kabinen-Lining integrierte Anmutung.

Aus der US 4,275,942 A ist eine als Schale gestaltete Gepäckablage bekannt, die aus einer geschlossenen Staustellung bzw. Ruheposition in eine offene Beladeposition ausgeschwenkt werden kann. Die Zugangsöffnung für die Passagiere ergibt sich dabei aus einer Höhendifferenz zwischen einer unteren Gehäusekante und der Vorderkante der Gepäckablage in der abgesenkten Position. Nachteilig hat sich dabei erwiesen, dass diese Gepäckablage bis in den Kopfbereich der Passagiere in Sitzposition schwenkt.

Die WO 2007/048916 A betrifft eine Überkopf-Gepäckablage für Flugzeuge, die zur Gepäckaufnahme ein bewegbares Gehäuse einschließt. Das in einer Transportstellung schräg geneigt angeordnete Gehäuse ist um einen außermittigen Drehpunkt in eine Belade- bzw. Entladeposition schwenkbar. In der geschlossenen Position bzw. der Transportstellung erfordert diese Gepäckablage eine wirksame Verriegelung des Gehäuses zum Schutz der Passagiere vor herunterfallenden Gepäckstücken. Zum Schließen der Gepäckablage ist aufgrund des außermittig angeordneten Gehäusedrehpunktes ein relativ hoher Kraftaufwand erforderlich.

Die Überkopf-Gepäckablage für Flugzeuge gemäß der WO 2008/012427 A ist in der Transportstellung schräg geneigt angeordnet. In der Belade- bzw. Entladeposition wird die Gepäckablage in Richtung des Passagiers um einen außermittig positionierten Drehpunkt geschwenkt. Synchron dazu verschwenkt ein der Gepäckablage nebengeordnetes Kabinenwandelement nach oben, um einen Zugang der Gepäckablage zu vereinfachen. Dieses Konzept beansprucht einen relativ großen Kabinenwandbereich. Außerdem ist für die einzelnen, getrennt zueinander beweglichen Kabinenwandelemente eine komplexe Kinematik erforderlich, die einer regelmäßigen Wartung bedarf sowie eines Nachjustierens zur Einhaltung gleicher Spaltmaße zwischen den Kabinenwandelementen und der Gepäckablage.

Die US 2006/0132007 A1 zeigt ein Gepäckfach, welches aufgrund von zwei unterschiedlich langen Schwenkarmen eine zwangsgesteuerte Bewegung zwischen einer geschlossenen und einer offenen Position ausführen kann. An einem der Schwenkarme ist über eine Verzahnung eine Dämpfung der Bewegung realisierbar.

Die EP 0 594 997 A1 beschreibt eine Überkopf-Gepäckablage mit einem kastenförmigen Gehäuse und einer ausschwenkbaren Schale, die mittels eines Führungssystems mit dem Gehäuse verbunden ist. Das Führungssystem besteht aus einem Hebel, einem Zahnrad, welches drehbar an fester Position mit dem Hebel verbunden ist, einem Zahnsegment, welches starr mit dem Gehäuse verbunden ist, und einem weiteren Zahnsegment, welches starr mit der Schale verbunden ist, wobei das Zahnrad so auf der Verbindungslinie der Anschlusspunkte des Hebels angeordnet ist, dass es mit beiden Zahnsegmenten in Eingriff steht.

Die EP 1 216 920 A1 beschreibt eine Gepäckablage mit absenkbarem Gepäckfach, wobei ein Führungssystem Nuten und Führungsbolzen aufweist. Die Nuten sind in einer Seitenwand eingebracht und beschreiben einen Kreisbahnabschnitt, und die Führungsbolzen greifen in die Nuten ein. Das Gepäckfach kann mittels einer Führungsschiene derart bewegt werden, dass sich die Führungsbolzen entlang der Nuten bewegen.

### Zusammenfassung der Erfindung

Es ist Aufgabe der Erfindung, eine Gepäckablage mit einer verbesserten Erreichbarkeit in der Belade- und Entladeposition zu realisieren, die mit minimalen Kräften zu betätigen und in der geschlossenen Position in einem Kabinenwandelement integriert ist.

Diese zuvor genannte Aufgabenstellung wird durch eine Gepäckablage, durch eine Passagierkabine für ein Flugzeug und durch ein Verfahren zur Anordnung und Montage einer Gepäckablage mit den Merkmalen der unabhängigen Patentansprüche gelöst.

Gemäß einem Ausführungsbeispiel der Erfindung umfasst die erfindungsgemäße Gepäckablage ein lagefixiertes, in einem Zwischenraum eines Flugzeugrumpfs angeordnetes Außengehäuse, in das ein separates, einen Gepäckaufnahmeraum bildendes Innengehäuse formschlüssig eingepasst ist. Gegenüber dem Außengehäuse ist das Innengehäuse um einen schwerpunktnahen, wandernden verschiebbaren

Drehpunkt zwangsgesteuert zwischen zwei Endpositionen beweglich angeordnet. In einer geschlossenen Endposition ist die Gepäckablage optisch in einem auch als Kabinen-Lining zu bezeichnenden Wandelement der Passagierkabine integriert.

Durch das erfindungsgemäße Konzept wird eine die Problemstellung der vorliegenden Erfindung erfüllende Gepäckablage (Hatrack) mit ausreichendem Gepäckvolumen realisiert, die anstelle einer einfachen Drehbewegung eine Zwangssteuerung ausübt mit einem dabei wandernden Drehpunkt des Innengehäuses. Aufgrund des schwerpunktnahen wandernden Drehpunktes der Gepäckablage stellen sich vorteilhaft minimale Handkräfte unabhängig von dem Ladezustand bei der zwangsgesteuerten Verstellung ein, wodurch sich ein hoher Bedienungskomfort der Gepäckablage einstellt. Der sich durch die Zwangssteuerung einstellende Verfahrweg kann vorteilhaft so ausgelegt werden, dass dieser sich zwischen zwei idealen Endpositionen bewegt. Eine erste sich bei der geschlossenen Gepäckablage einstellende Endposition ermöglicht eine rumpfnahe Ausrichtung. Mit der zweiten Endposition kann eine beladefreundliche Lage der Gepäckablage erreicht werden. Vorteilhaft stellt sich durch die Zwangssteuerung der Gepäckablage ein Konstrukt ein, mit dem eine optimale Schwenkbewegung erreichbar ist, wodurch Toträume in dem Schwenkbereich minimiert werden und gleichzeitig die Gepäckablage keinen negativen Einfluss auf die Gestaltung der Passagierkabine nimmt, zur Erzielung einer möglichst großzügig ausgeführten Kabine. Weiterhin können aufgrund der zwangsgesteuerten Stellbewegung des Innengehäuses ergonomisch günstige Ladehöhen für die Gepäckablage definiert werden, die eine vereinfachte Ablage von Gepäckstücken ermöglichen. In der Belade- und Entladeposition der erfindungsgemäßen Gepäckablage kann eine nahezu horizontale Lage des Bodens von dem Innengehäuse realisiert werden, die in Verbindung mit einer ergonomisch günstigen Höhe eine optimale Nutzung der Gepäckablage ermöglicht, ohne Beeinträchtigung der Passagiere auf den Sitzreihen. Durch die Einflussnahme auf die zwangsgesteuerte Bewegung des Innengehäuses, die es erlaubt, die Stellbewegungen bzw. Verfahrwege sowie die Endpositionen der Gepäckablage bzw. des Innengehäuses nahezu frei zu definieren, stellt sich ein großer Freiheitsgrad inbesondere bezüglich der Y- und Z-Position im Flugzeug ein. Außerdem ergibt sich als ein weiterer Vorteil die Möglichkeit, dass die erfindungsgemäße Gepäckablage auch für Flugzeuge mit einer kleineren Cross-Section einsetzbar ist. Das erfindungsgemäße Konzept ermöglicht weiterhin, eine airlinespezifische Anpassung der Ladehöhe zu realisieren. Die eine optimale Funktionalität, eine hohe Stabilität und Funktionssicherheit aufweisende erfindungsgemäße Gepäckablage ist vereinfacht im Flugzeugrumpf integrierbar, wodurch insgesamt eine kostengünstige Gepäckablage realisiert werden kann. Durch den Aufbau einschließlich der Zwangsführung der erfindungsgemäßen Gepäckablage stellt sich vorteilhaft eine verbesserte Versagenssicherheit im Crashfall ein. Weiterhin erfüllt die Gepäckablage gemäß der Erfindung die Sicherheitsvorschriften, die u. a. auch für Extrembelastungen einen Schutz der Passagiere vor herunterfallenden Gepäckstücken vorsehen.

Ein weiteres Ausführungsbeispiel der Erfindung sieht vor, dass zur zwangsgesteuerten Drehbewegung des Innengehäuses dieses an beiden Stirnseiten zwei diagonal zueinander versetzte, über einen Riemen verbundene Zahnräder umfasst. Im Einbaustand greifen beide Zahnräder in zwei gegenüberliegende, zueinander bogenförmig verlaufende Zahnstangenführungen ein, die in Stirnwänden des Außengehäuses eingebracht sind. Diese zahnstangengeführte Zwangssteuerung gewährleistet einen vorteilhaft schwerpunktnahen wandernden Drehpunkt zwischen den beiden Endpositionen des schwenkbaren Innengehäuses. Das Innengehäuse kann über die Zahnstangenführungen eine nahezu freie Schwenkbewegung ausüben mit dem Ziel, dass die gewünschten Endpositionen ideal in Verbindung mit einem optimierten Schwenkbereich des Innengehäuses erreicht werden, was sich vorteilhaft auf die Gestaltung einer möglichst großzügigen Passagierkabine auswirkt. Als Maßnahme zur Erzielung einer sicheren, klemmfreien Zwangsführung sind die Zahnräder jeder Stirnseite des Innengehäuses über einen Riemen miteinander verbunden. Jedem ortsfest drehbar an dem Innengehäuse positionierten Zahnrad ist eine Riemenscheibe zugeordnet, wobei jeweils zwei Riemenscheiben über einen Riemen verbunden sind zur Darstellung eines trockenen Riementriebs.

Es ist eine motorische Verstellung des Innengehäuses der Gepäckablage vorgesehen. Für eine derartige servounterstützte Verstellung bietet es sich an, einen Stellmotor einzusetzen, der vorteilhaft über einen Winkeltrieb eine Antriebsverbindung zu einer Achse herstellt, die zwei Zahnräder an gegenüberliegenden Stirnseiten des Innengehäuses verbindet. Dieser elektrische Antrieb kann vorteilhaft ohne eine Umlenkung, Kinematik oder ein separates Getriebe mit geringstem Aufwand platzsparend in dem Boden des Innengehäuses integriert werden.

Alternativ zu einer motorischen Verstellung kann gemäß der Erfindung ein manuelles Öffnen und Schließen der Gepäckablage vorgesehen werden. Zur vereinfachten Handhabung ist dazu bevorzugt in dem Boden des Innengehäuses eine Griffmulde eingebracht. Mittels eines ebenfalls bodenseitig angeordneten Betätigungsriegels kann der Stellmotor angesteuert oder für eine manuelle Betätigung der Gepäckablage entkoppelt werden.

Gemäß einem weiteren Ausführungsbeispiel der Erfindung bildet das Innengehäuse der Gepäckablage einen bis auf eine Zugangsöffnung geschlossenen Gepäckaufnahmeraum mit einem weitestgehend rechteckförmigen Querschnittsprofil. Das Innengehäuse der oberhalb der Passagier-Sitzreihen angeordneten Gepäckablage ist von einer offenen, weitestgehend horizontalen Beladeposition ausgehend, in eine nahezu vertikale, auch als Transportstellung bezeichnete Endposition schwenkbar. Durch ein Verschwenken des Innengehäuses von der Beladeposition ausgehend gelangt das Gehäuse in eine Transportposition, in der das Gepäck sicher aufbewahrt ist. Während der Schwenkbewegung wird das Gepäck über einen eine Schütte bildenden Bodenabschnitt in einen der Zugangsöffnung gegenüberliegenden Bereich des Innengehäuses verlagert. Aufgrund der oben geschwenkten Lage der Zugangsöffnung in der geschlossenen Endposition erfordert das Innengehäuse vorteilhaft keine separate Abdeckklappe. Das erfindungsgemäße Konzept sieht vor, dass in der geschlossenen Position der Gepäckablage das Außengehäuse gleichzeitig die Zugangsöffnung des Innengehäuses vollständig abdeckt. Die in der Gepäckablage befindlichen Gepäckstücke sind dadurch auch in extremen Flugsituationen sicher aufgehoben.

Ein weiterer Vorteil der erfindungsgemäßen Lösung liegt darin, dass in der geschlossenen Position der Gepäckablage das Innengehäuse vollständig von dem in dem Zwischenraum des Flugzeugrumpfes integrierten Außengehäuse aufgenommen ist. Gleichzeitig ist das Innengehäuse bzw. dessen Bodenbereich in das Kabinen-Lining der Passagierkabine eingefügt, wobei sich gleichzeitig enge, kaum sichtbare umlaufende Spaltmaße für das Innengehäuse einstellen, zur Schaffung eines nahtlosen Übergangs zu benachbarten Konturen (continous Lining). Vorteilhaft ist damit ein anzustrebendes einheitliches optisches Erscheinungsbild der Deckenverkleidung und / oder der Wandverkleidung der Passagierkabine erreichbar, was den Gesamteindruck der Passagierkabine vorteilhaft beeinflusst. Der bei geschlossener Gepäckablage sichtbare Bodenbereich des Innengehäuses kann von der Gestaltung und / oder Farbgebung her der benachbarten Kabinenverkleidung angepasst oder abweichend ausgeführt werden. Entsprechend den Kundenwünschen bietet es sich an, diesen Bodenbereich des Gehäuses als ein dekoratives Element zu gestalten, welches beispielsweise kundenspezifisch auf ein standardisiertes Gehäuse des Gepäckfachs aufgesetzt wird, ohne dass eine aufwändige Neuzertifizierung erforderlich ist.

Gemäß einer weiteren Ausführungsform der Erfindung ist das Außengehäuse der Gepäckablage lösbar mit der flugzeugfesten Struktur wie den Spanten, Stringern oder sonstigen tragenden Elementen im Bereich des Flugzeugrumpfes verbunden. Die Befestigung kann unmittelbar oder mittelbar über Haltemittel beispielsweise einen Außenrahmen erfolgen. Bevorzugt sind als lösbare Verbindungselemente Snap and Klick-Verschlüsse vorgesehen, mit denen eine wirksame form- und / oder kraftschlüssige Befestigung der Gepäckablage hergestellt werden kann.

Zur Schaffung einer gewichtsoptimierten Gepäckablage sind das Außengehäuse und / oder das Innengehäuse der Gepäckablage aus einem Verbundwerkstoff wie GFK (glasfaserverstärkter Kunststoff) oder CFK (kohlenstofffaserverstärkter Kunststoff) hergestellt. Zur Versteifung des Bodens vom Innengehäuse bietet es sich an, diesen als einen Hohlkörper zu gestalten, bei dem ein Wabenkern zwischen Decklagen aus einem Verbundwerkstoff eingebracht ist.

Ein wichtiger Aspekt der Erfindung ist darin zu sehen, dass in der geschlossenen Position bzw. der Transportstellung die Gepäckablage lagefixiert gesichert ist. Dazu bietet sich ein zwischen dem Innengehäuse und dem Außengehäuse eingesetzter Verschlussriegel an, der bevorzugt über die Griffmulde oder den Betätigungsriegel des Innengehäuses gelöst werden kann. Der bevorzugt auf das Gehäuse aufgesetzte, z.B. aufgeklebte, genietete oder aufgeschraubte Verschlussriegel kann erfindungsgemäß durch ein Abdeckelement bedeckt werden, zur Erzielung einer verbesserten Sicherheit gegenüber den Passagieren. Das Abdeckelement kann ergänzend zu einer Schutzfunktion gleichzeitig als dekoratives, kundenspezifisches Element ausgeführt werden. Da das Abdeckelement von einer tragenden Funktion frei ist, kann es nahezu in jeder gewünschten Form hergestellt werden und bietet eine kostengünstige Möglichkeit, unterschiedliche Varianten oder Effekte der Kabinengestaltung zu verwirklichen.

Eine weitere Ausgestaltung der Erfindung schließt ein Schienensystem ein, über das eine optimale Lagepositionierung der Gepäckablage erzielbar ist. Über das zwei parallel verlaufende Schienen umfassende, an der flugzeugfesten Struktur fixierte Schienensystem ist die Gepäckablage verschiebbar geführt und bezüglich der Passagiersitzreihen individuell fixierbar. Die Befestigung der Gepäckablage erfolgt dabei beispielsweise über formschlüssig in die Schienen eingreifende Sicherungselemente, die vor einer Lagefixierung ein individuelles Verschieben der Gepäckablage in dem Schienensystem ermöglichen.

Ein weiterer wichtiger Aspekt der Erfindung sieht vor, die Gepäckablage als eine modulare Baueinheit der Innenausstattung des Flugzeugs zu gestalten, die typenübergreifend für mehrere Rumpfquerschnittsgrößen von Flugzeugen eingesetzt werden kann. Durch die Modulbauweise kann die erfindungsgemäße Gepäckablage vorteilhaft für unterschiedliche Flugzeuge mit voneinander abweichenden Cross-Sections eingesetzt verwendet. Diese auch als ein Baukastensystem zu bezeichnende modulare Baueinheit ermöglicht vorteilhaft die Herstellung von gleichen Gepäckablagen in höheren Stückzahlen, mit der Folge reduzierter Stückkosten.

Gemäß einer weiteren Ausführungsform der Erfindung ist die Vorrrichtung für eine Passagierkabine eines Flugzeugs vorgesehen, wobei die zur Aufnahme von Gepäck bestimmte Vorrichtung eine oberhalb von Sitzreihen für Passagiere abgeordnete Gepäckablage umfasst. Die Gepäckablage schließt ein einteilig gestaltetes, mittelbar oder unmittelbar in Verbindung mit lösbaren Haltemitteln an einer flugzeugfesten Struktur befestigtes Außengehäuse ein, in das ein bis auf eine Zugangsöffnung geschlossenes Innengehäuse formschlüssig eingepasst ist. Das Innengehäuse ist über Zahnräder in Verbindung mit Zahnstangenführungen von einer offenen Beladeposition ausgehend, in eine geschlossene Transportposition und umgekehrt zwangsgesteuert verstellbar, wobei sich das Innengehäuse um einen schwerpunktnahen, wandernden Drehpunkt verschiebt. In der geschlossenen Endposition ist die Gepäckablage optisch in ein Kabinen-Lining der Passagierkabine integriert.

Gemäß einem weiteren Ausführungsbeispiel der Erfindung ist ein Verfahren zur Anordnung und Montage einer schwenkbaren, ein Außengehäuse und ein Innengehäuse umfassenden Vorrichtung zur Gepäckablage in der Passagierkabine eines Flugzeug vorgesehen, das folgende Schritte einschließt. Zunächst erfolgt in einem ersten Verfahrensschritt ein Zusammenfügen eines einteiligen Innengehäuses, das zur zwangsgesteuerten Verstellung bevorzugt einen Stellmotor und an den Stirnseiten jeweils zwei Zahnräder umfasst, die über Achsen verbunden sind. Der zweite Verfahrensschritt sieht ein Einsetzen des Innengehäuses in das Außengehäuse vor. Dabei greifen Zahnräder des Innengehäuses in Zahnstangenführungen des Außengehäuses ein, um eine zwangsgesteuerte Verstellung des Innengehäuses gegenüber dem Außengehäuse sicherzustellen, bei der sich ein schwerpunktnaher wandernder Drehpunkt des Innengehäuses einstellt. Der weitere Schritt sieht ein individuelles Positionieren der Gepäckablage bezüglich der Passagiersitzreihe an der flugzeugfesten Struktur vor, wozu die Gepäckablage bevorzugt in einem Schienensystem verschiebbar geführt ist. Als letzter Verfahrensschritt erfolgt ein Befestigen bzw. Fixieren des Außengehäuses der Gepäckablage an der festen Struktur des Flugzeugs wie Spanten oder Stringern im Bereich des Flugzeugrumpfs, wozu beispielsweise eine formschlüssige und / oder kraftschlüssige Schnappverbindung vorgesehen ist.

### Kurze Beschreibung der Zeichnungen

Im Folgenden werden mit Hinweis auf die beigefügten Figuren Ausführungsbeispiele der Erfindung beschrieben. Es zeigen:
- Figur 1,: einen Ausschnitt einer Passagierkabine eines Flugzeugs;
- Figur 2,: eine erfindungsgemäß gestaltete Gepäckablage als Einzelteil in einer Perspektive;
- Figur 3,: ein Innengehäuse einer erfindungsgemäßen Gepäckablage als Einzelteil in einer Perspektive;
- Figur 4,: eine Schnittansicht gemäß der Linie A - A in Fig. 3;
- Figur 5,: eine Schnittansicht gemäß der Linie B - B in Fig. 4;
- Figur 6,: einen Ausschnitt eines Flugzeugrumpfes mit geschlossener Gepäckablage;
- Figur 7,: einen Ausschnitt eines Flugzeugrumpfes mit geöffneter Gepäckablage.

### Detaillierte Beschreibung exemplarischer Ausführungsbeispiele

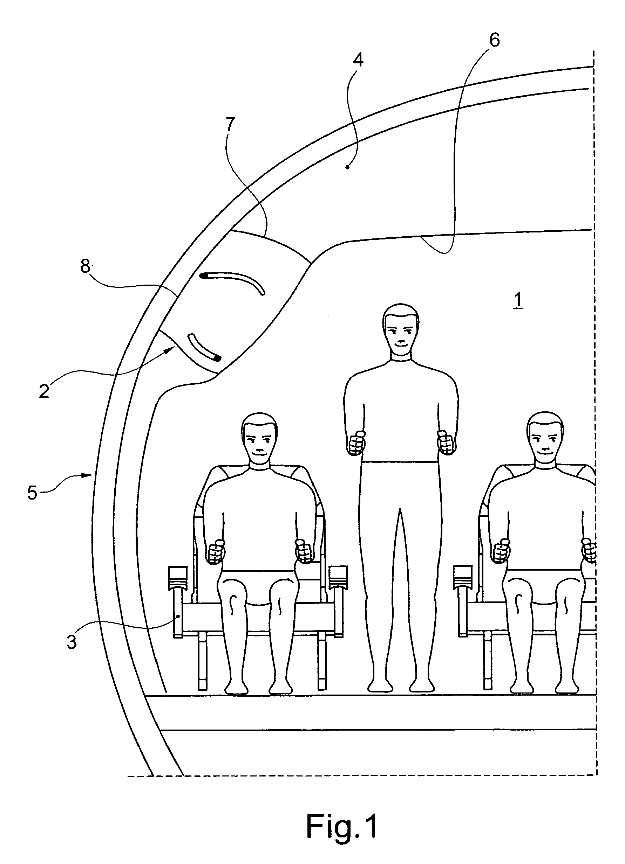

In der nachfolgenden Beschreibung der Figuren 1 bis 8 werden für übereinstimmende oder sich entsprechende Bauteile und Elemente zumindest teilweise gleiche Bezugsziffern verwendet.

Die Figur 1 zeigt einen Ausschnitt aus einer Passagierkabine 1 eines Flugzeugs, wodurch die Lage und Anordnung einer Gepäckablage 2 für die Passagiere oberhalb einer äußeren Sitzreihe 3 verdeutlicht wird. Die Gepäckablage 2 ist in einer geschlossenen Endposition dargestellt, in der diese vollständig in einem Zwischenraum 4 eines Flugzeugrumpfs 5 eingesetzt und gleichzeitig übergangslos in einer inneren Kabinenwand der Passagierkabine, einem Kabinen-Lining 6 integriert ist. Zur Befestigung der Gepäckablage 2 ist ein Außengehäuse 7 insbesondere über lösbare Befestigungselemente an einer flugzeugfesten Struktur 8 des Flugzeugrumpfs 5 angekoppelt. Durch die Figur 1 wird außerdem deutlich, dass die Gepäckablage 2 weitestgehend mit der Augenhöhe eines Passagiers übereinstimmend positioniert ist, was die Ablage und Entnahme von Gepäckstücken aus der Gepäckablage 2 vereinfacht. Weiterhin ist ein ausreichender Abstand zwischen der Gepäckablage 2 und sitzenden Passagieren gewährleistet, so dass auch eine geöffnete Gepäckablage 2 diese Passagiere nicht nachteilig beeinträchtigt.

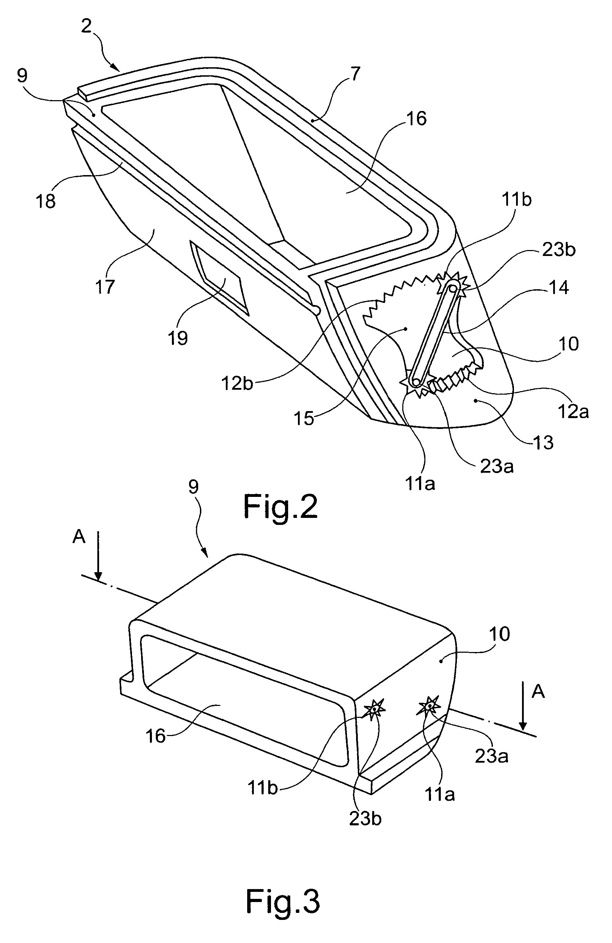

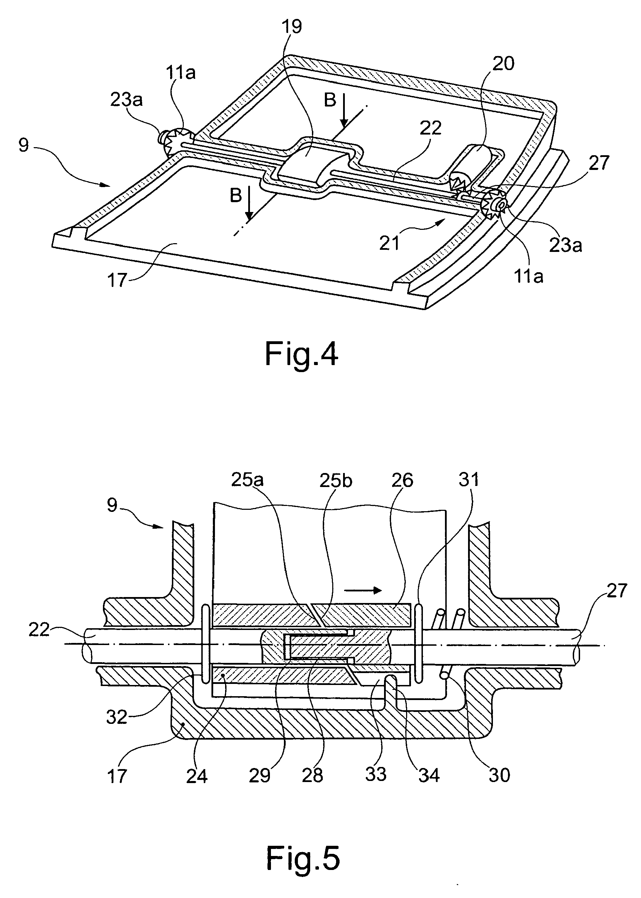

In Figur 2 ist die Gepäckablage 2 als Einzelteil in einer Perspektive dargestellt. Das Außengehäuse 7 bildet ein nahezu U-förmiges Profil, in das ein Innengehäuse 9 eingepasst ist. Zur Erreichung einer zwangsgesteuerten Bewegung des Innengehäuses 9 gegenüber dem Außengehäuse 7 sind jeder Stirnseite 10 des Innengehäuses 9 zwei diagonal zueinander versetzte drehbare Zahnräder 11 a, 11 b zugeordnet, die formschlüssig in zwei gegenüberliegende, zueinander bogenförmig verlaufende Zahnstangenführungen 12a, 12b eingreifen, die jeweils in einer Stirnwand 13 des Außengehäuses 7 eingebracht sind. Beiden Zahnrädern 11 a, 11 b nebengeordnet ist jeweils eine Riemenscheibe 23a, 23b, die über einen Riemen 14 zur Schaffung eines Riementrieb verbunden sind, wodurch sich ein sicherer, klemmfreier Antrieb der Zwangsführung einstellt. Das Innengehäuse 9 ist über die Zahnstangenführungen 12a, 12b in Verbindung mit den Zahnrädern 11a, 11b so gelagert bzw. geführt, dass sich eine nahezu freie Schwenkbewegung einstellt, um die gewünschten Endpositionen ideal und mit einem optimierten Schwenkbereich zu erreichen. Die Zwangssteuerung des Innengehäuses 9 bewirkt einen schwerpunktnahen wandernden Drehpunkt 15 des Innengehäuses 9. Zur manuellen Betätigung des Innengehäuses 9 ist im Bereich einer Zugangsöffnung 16 in einem Boden 17 eine Griffmulde 18 vorgesehen. Alternativ dazu bietet es sich an, das Innengehäuse 9 motorisch zu verstellen, wozu in dem Boden 17 ein Betätigungsriegel 19 integriert ist, über den ein in Figur 4 abgebildeter Stellmotor 20 aktivierbar ist.

Die Figur 3 zeigt das Innengehäuse 9 als Einzelteil in einer Perspektive, das bis auf die Zugangsöffnung 16 einen geschlossenen Gepäckaufnahmeraum mit einem weitestgehend rechteckförmigen Querschnittsprofil bildet. Beide Stirnseiten 10 sind bestückt mit den Zahnradpaaren 11a, 11b in Verbindung mit den zugehörigen Riemenscheiben 23a, 23b.

Die Figuren 4 und 5 verdeutlichen einen elektrischen Antrieb des Innengehäuses 9, der einen in dem Boden 17 des Innengehäuses 9 integrierten Stellmotor 20 umfasst, der über einen Winkeltrieb 21 mit einer Achse 22 in Wirkverbindung steht, die auf den Stirnseiten 10 des Innengehäuses 9 angeordnete Zahnräder 11 a verbindet. Eine Aktivierung des Stellmotors 20 zur elektrischen Verstellung des Innengehäuses 9 erfolgt über den Betätigungsriegel 19, der in dem Boden 17 des Innengehäuses 9 angeordnet ist. Alternativ zu einem elektromotorischen Antrieb kann das Innengehäuse 9 mechanisch betätigt werden. Über den Betätigungsriegel 19 kann dazu der Stellmotor 20 von dem Winkeltrieb 21 entkoppelt werden. Dies geschieht wie in Figur 5 dargestellt, mit Hilfe eines die Achse 22 umschließenden Riegels 24. Die Achse 22 ist im Bereich des Riegels 24 geteilt, wobei zur Drehmomentübertragung ein Achsenabschnitt 27 beispielsweise über eine Außenverzahnung 28 in ein korrespondierendes Innenverzahnungsprofil 29 der Achse 22 formschlüssig eingreift, wobei dieser Formschluss eine Axialverschiebung des Achsenabschnitts 27 ermöglicht. Zum Entkoppeln des Stellmotors 22 wird der Riegel 24 verdreht, wodurch die schräg verlaufend ausgebildete Stirnfläche 25a des Riegels 24 mit einer entsprechenden Stirnfläche 25b eines Druckkonus 26 zusammenwirkt und eine Axialverschiebung eines Druckkonus 26 in Pfeilrichtung auslöst. Unterstützt durch die Kraft einer Druckfeder 30 ist eine drehfest mit dem Achsenabschnitt 27 verbundene Anlaufscheibe 31 an dem Druckkonus 26 abgestützt, so dass eine Axialverschiebung des Druckkonus 26 gleichzeitig eine Verschiebung des Achsenabschnitts 27 auslöst und damit ein Antrieb des Stellmotors 20 unterbrochen ist. Gegenseitig zum Druckkonus 26 ist der Riegel 24 an einer der Achse 22 zugeordneten Anlaufscheibe 32 abgestützt. Zur Verdrehsicherung weist der Druckkonus 26 eine Längsnut 33 auf, in die ein dem Innengehäuse 9 zugeordneter Führungszapfen 34 formschlüssig eingreift. Die Längsnut 33 erstreckt sich dabei über eine Länge, die einen maximalen Hub des Druckkonus 26 übertrifft.

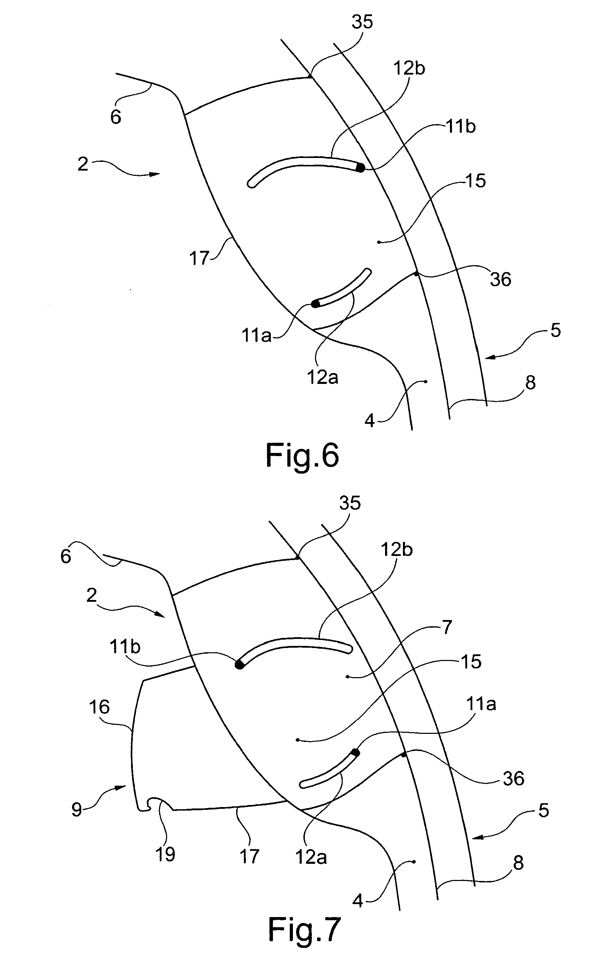

Die Figuren 6 und 7 zeigen einen Ausschnitt des Flugzeugrumpfs 5 mit zugeordneter Gepäckablage 2 in einer geschlossenen, der Transportstellung entsprechenden ersten Endposition (Figur 6) sowie in einer zweiten Endposition, die der geöffneten Entladeposition entspricht (Figur 7). Die Befestigung der Gepäckablage 2 erfolgt über eine lösbare formschlüssige und / oder kraftschlüssige Schnappverbindung 35, 36, die insbesondere als Snap and Klick-Verschluss ausgeführt ist, zur Darstellung einer sicheren Befestigung an der flugzeugfesten Struktur 8, beispielsweise Spanten oder Stringern des Flugzeugrumpfs 5. Zur individuellen Einstellung der Gepäckablage 2 bietet es sich an, diese in parallel verlaufenden Schienen anzuordnen, die in Längsrichtung des Flugzeugs angeordnet sind. Eine Befestigung kann dabei beispielsweise mit in den Schienen integrierten Befestigungselementen erfolgen, die mit den Schnappverbindungen 35, 36 zusammenwirken. Ein Verschwenken des Innengehäuses 9 von der in Figur 7 abgebildeten Belade- bzw. Entladeposition in die Transportposition gemäß Figur 6 bewirkt ein Verlagern der aufgenommenen Gepäckstücke über den eine Schütte bildenden Boden 17 in den nach unten gerichteten, muldenartigen Bereich des Innengehäuses 9. In der Transportposition ist der Boden 17 übergangslos in das Kabinen-Lining 6 integriert. Ein mechanisches Öffnen der Gepäckablage 2 zur Entnahme von Gepäckstücken aus dem Innengehäuse 9 kann über die Griffmulde 19 im Boden 17 erfolgen. Alternativ dazu bietet sich eine elektrische Verstellung an, wozu der Stellmotor 20 gemäß Figur 4 über den Betätigungsriegel 19 im Boden 17 des Innengehäuses 9 aktiviert werden kann.

### Bezugszeichenliste

- 1: Passagierkabine
- 2: Gepäckablage
- 3: Sitzreihe
- 4: Zwischenraum
- 5: Flugzeugrumpf
- 6: Kabinen-Lining
- 7: Außengehäuse
- 8: Struktur
- 9: Innengehäuse
- 10: Stirnseite
- 11a: Zahnrad
- 11b: Zahnrad
- 12a: Zahnstangenführung
- 12b: Zahnstangenführung
- 13: Stirnwand
- 14: Riemen
- 15: Drehpunkt
- 16: Zugangsöffnung
- 17: Boden
- 18: Griffmulde
- 19: Betätigungsriegel
- 20: Stellmotor
- 21: Winkeltrieb
- 22: Achse
- 23a: Riemenscheibe
- 23b: Riemenscheibe
- 24: Riegel
- 25a: Stirnfläche
- 25b: Stirnfläche
- 26: Druckkonus
- 27: Achsenabschnitt
- 28: Außenverzahnung
- 29: Innenverzahnungsprofil
- 30: Druckfeder
- 31: Anlaufscheibe
- 32: Anlaufscheibe
- 33: Längsnut
- 34: Führungszapfen
- 35: Schnappverbindung
- 36: Schnappverbindung

## Patentansprüche

1. Gepäckablage für eine Passagierkabine eines Flugzeuges, die Gepäckablage (2) aufweisend:
ein Gehäuse mit
einem Außengehäuse (7) und
einem Innengehäuse (9);
wobei das Außengehäuse (7) in einem Zwischenraum (4) eines Flugzeugrumpfs (5) fixierbar ist;
wobei das Innengehäuse (9) um einen wandernden Drehpunkt (15) zwischen zwei Endpositionen zwangsgesteuert beweglich ausgebildet ist;
wobei die Gepäckablage zur Anordnung oberhalb einer Sitzreihe (3) in einer Passagierkabine (1) eines Flugzeugs oder eines Fahrzeugs und zur Befestigung an einer rahmenartigen Struktur (8) ausgeführt ist;
wobei in das Außengehäuse (7) das Innengehäuse (9) eingepasst ist; und
zwei Zahnräder (11a, 11b);
**dadurch gekennzeichnet dass** die zwei Zahnräder (11a, 11b) diagonal zueinander versetzt angeordnet sind und über einen Riemen (14) miteinander verbunden sind;
wobei die Zahnräder (11a, 11 b) zur zwangsgesteuerten Drehbewegung an jeder Stirnseite (10) des Innengehäuses (9) ausgeführt sind und formschlüssig in zwei gegenüberliegende, zueinander bogenförmig verlaufende Zahnstangenführungen (12a, 12b) eingreifen, die in Stirnwänden (13) des Außengehäuses (7) eingebracht sind.

2. Gepäckablage nach Anspruch 1,
wobei eine Verstellung des Innengehäuses (9) gegenüber dem Außengehäuse (7) der Gepäckablage (2) mit einem Stellmotor (20) erfolgt, der über einen Winkeltrieb (21) mit einer Achse (22) in Wirkverbindung steht, die zwei an den Stirnseiten (10) des Innengehäuses (9) übereinstimmend positionierte Zahnräder (11a) verbindet.

3. Gepäckablage nach Anspruch 2,
wobei der Stellmotor (20) über einen Betätigungsriegel (19) angesteuert oder für eine manuelle Betätigung der Gepäckablage (2) entkoppelt werden kann.

4. Gepäckablage nach Anspruch 1, weiterhin aufweisend:
eine an dem Innengehäuse ausgebildete Griffmulde (18) zum manuellen Öffnen und Schließen des Innengehäuses (9).

5. Gepäckablage nach einem der Ansprüche 1 bis 4,
wobei das Innengehäuse (9) der Gepäckablage (2) einteilig gestaltet ist und ein rechteckförmiges Querschnittsprofil aufweist;
wobei das Innengehäuse (9) einen bis auf eine Zugangsöffnung (16) geschlossenen Gepäckaufnahmeraum bildet, der von einer geöffneten, horizontalen Lage ausgehend, in eine vertikale Lage schwenkbar ist;
wobei sich das Gepäck über einen eine Schütte bildenden Abschnitt des Innengehäuses (9) verlagert.

6. Gepäckablage nach einem der Ansprüche 1 bis 5,
wobei in der geschlossenen Endposition die Gepäckablage (2) vollständig in einem Zwischenraum (4) eines Flugzeugrumpfes (5) integrierbar, sodass die Gepäckablage optisch in ein Kabinen-Lining (6) der Passagierkabine (1) einfügbar ist;
wobei ein Boden (17) des Innengehäuses (9) einen für die Gepäckablage (2) bestimmten Ausschnitt im Kabinen-Lining (6) bilden kann, wobei der Boden an eine Formgebung oder Farbgebung von dem Kabinen-Lining (6) angepasst oder abweichend gestaltet sein kann.

7. Gepäckablage nach einem der Ansprüche 1 bis 6, weiterhin aufweisend:
eine formschlüssige oder kraftschlüssige Schnappverbindung, über welche das Außengehäuse (7) lösbar mit der flugzeugfesten Struktur (8) im Bereich des Flugzeugrumpfs (5) befestigt ist.

8. Gepäckablage nach einem der Ansprüche 1 bis 7,
wobei das Außengehäuse (7) oder das Innengehäuse der Gepäckablage (2) aus einem Verbundwerkstoff wie GFK (glasfaserverstärkter Kunststoff) oder CFK (kohlenstofffaserverstärkter Kunststoff) hergestellt ist und der Aufbau des Bodens (17) des Innengehäuses (9) zur Versteifung einzelne Decklagen aus einem Verbundwerkstoff umfassen kann, zwischen denen ein Wabenkern eingebracht ist.

9. Gepäckablage nach einem der Ansprüche 3 oder 4, weiterhin aufweisend:
zumindest einen selbsttätig wirkenden Verschlussriegel;
wobei in der geschlossenen Position der Gepäckablage (2) das Innengehäuse (9) mit dem zumindest einem selbsttätig wirkenden Verschlussriegel gesichert ist, der mittels der Griffmulde (18) oder dem Betätigungsriegel (19) für den Stellmotor (20) gelöst werden kann.

10. Gepäckablage nach einem der Ansprüche 1 bis 9, weiterhin aufweisend:
ein Schienensystem;
wobei das Schienensystem in der flugzeugfesten Struktur (8) des Flugzeugrumpfs (5) anordenbar ist und über das die Gepäckablage (2) verschiebbar geführt und individuell bezüglich einer Sitzreihe (3) für Passagiere fixiert werden kann.

11. Flugzeug mit einer Gepäckablage nach einem der Ansprüche 1 bis 10.

12. Verfahren zur Anordnung und Montage einer schwenkbaren Vorrichtung zur Aufnahme von Gepäck in einer Passagierkabine eines Flugzeuges oberhalb einer Sitzreihe (3) in einer Passagierkabine (1) eines Flugzeugs angeordneten und ein Außengehäuse (7) und ein Innengehäuse (9) umfassenden Vorrichtung, das Verfahren aufweisend die folgende Schritte:
- Zusammenbau des Innengehäuses (9) mit einem Stellmotor (20), der über einen Winkeltrieb (21) einer Achse (22) zugeordnet ist, und die Achse (22) zwei gegenüberliegende, an den Stirnseiten (10) des Innengehäuses (9) positionierte Zahnräder (11 a, 11b) verbindet;
- Zusammenfügen des Innengehäuses (9) in das Außengehäuse (7), wobei zur zwangsgesteuerten Verstellung die Zahnräder (11a, 11b) des Innengehäuses (9) in Zahnstangenführungen (12a, 12b) des Außengehäuses (7) eingreifen;
- Positionieren der Gepäckablage (2) bezüglich einer Sitzreihe (3) für Passagiere;
- Befestigen und Fixieren des Außengehäuses (7) der Gepäckablage (2) an einer flugzeugfesten Struktur (8) des Flugzeugrumpfs (5).

## Claims

1. A device for storing luggage in a passenger cabin of an aircraft, with the device comprising:
a housing having
an external housing (7) and
an internal housing (9);
wherein the external housing (7) can be fixed in a space (4) of an aircraft fuselage (5);
wherein the internal housing (9) is designed so as to be movable in a force-guided manner between two end positions about a moving pivot (15);
wherein the device is designed for arrangement above a seat row (3) in a passenger cabin (1) of an aircraft or of some other vehicle and is designed for fastening to a frame-like structure (8);
wherein the internal housing (9) is fitted into the external housing (7), and
two gearwheels (11a, 11b);
**characterized in that** the two gearwheels (11 a, 11 b) are diagonally offset relative to each other and are connected by way of a belt (14);
wherein the gearwheels (11a, 11b) are designed for force-guided rotary movement of each face side (10) of the internal housing (9) and in a form-locking manner engage two opposing arc-shaped toothed rack guides (12a, 12b) that are incorporated in face walls (13) of the external housing (7).

2. The device of claim 1,
wherein adjustment of the internal housing (9) relative to the external housing (7) of the hatrack (2) takes place by means of a servo motor (20) which by way of an angled drive (21) is in operative connection with a shaft (22) that connects two gearwheels (11a) which are correspondingly positioned on the face sides (10) of the internal housing (9).

3. The device of claim 2,
wherein the servo motor (20) can be controlled by way of an actuator latch (19) or can be decoupled for manual operation of the hatrack (2).

4. The device of claim 1, further comprising:
a recessed grip at the bottom (18) for manual opening and closing of the internal housing (9).

5. The device of any one of claims 1 to 4,
wherein the internal housing (9) of the hatrack (2) is of a single-part design and comprises a rectangular cross section profile;
wherein the internal housing (9) forms a luggage receptacle that is closed except for an access opening (16), which luggage receptacle can be swivelled from an open position, which is horizontal, to a vertical position;
wherein the luggage is displaced along a section of the bottom (17), which section forms a chute.

6. The device of any one of claims 1 to 5,
wherein in the closed end position the hatrack (2) is fully integrated in a space (4) of an aircraft fuselage (5) and is visually integratable in a cabin lining (6) of the passenger cabin (1);
wherein the bottom (17) of the internal housing (9) may compensate for a cutout in the cabin lining (6), which bottom from the point of view of the design and/or colouration may match the cabin lining (6) or may be designed so as to differ from the aforesaid.

7. The device of any one of claims 1 to 6, further comprising:
a form-locking or force-locking snap connection by way of which the external housing (7) in the region of the aircraft fuselage (5) is detachably affixed to the structure (8) that is fix at the aircraft.

8. The device of any one of claims 1 to 7,
wherein the external housing (7) or the internal housing of the hatrack (2) are produced from a composite material, for example glass-fibre-reinforced plastic (GFRP) or carbon-fibre-reinforced plastic (CFRP), and the construction of the bottom (17) of the internal housing (9), for the purpose of stiffening, can comprise individual cover layers of a composite material, between which cover layers a honeycomb core is inserted.

9. The device of any one of claims 2 to 4, further comprising:
at least one automatically operating closure latch;
wherein in the closed position of the hatrack (2) the internal housing (9) is secured by means of the at least one automatically operating closure latch which can be released by means of the recessed grip (18) at the bottom or by means of the actuator latch (19) for the servo motor (20).

10. The device of any one of claims 1 to 9, further comprising:
a rail system;
wherein the rail system is arrangable in the structure (8) of the aircraft fuselage (5), which structure (8) is fix at the aircraft, and by way of which rail system the hatrack (2) is slidably guided and can be individually fixed relative to a seat row (3) for passengers.

11. An aircraft comprising a device of any one of claims 1 to 10.

12. A method for arranging and installing a swivellable device for storing luggage in a passenger cabin of an aircraft above a seat row (3), which device comprises an external housing (7) and an internal housing (9) and is arranged in a passenger cabin (1) of an aircraft, which method comprises the following steps:
- assembling the internal housing (9) with a servo motor (20) which by way of an angled drive (21) is associated with a shaft (22), with the shaft (22) connecting two facing gearwheels (11a, 11b) that are positioned on the face sides (10) of the internal housing (9);
- joining the internal housing (9) to the external housing (7), wherein the gearwheels (11a, 11b) of the internal housing (9) engage toothed rack guides (12a, 12b) of the external housing (7) for force-guided adjustment;
- positioning the hatrack (2) relative to a seat row (3) for passengers;
- fastening and fixing the external housing (7) of the hatrack (2) to a structure (8) of the aircraft fuselage (5), which structure (8) is fix at the aircraft.

## Revendications

1. Compartiment à bagages pour une cabine des passagers d'un avion, le compartiment à bagages (2) présentant :
un boîtier doté de
un boîtier externe (7) et
un boîtier interne (9) ;
le boîtier externe (7) pouvant être fixé dans un espace intermédiaire (4) d'un fuselage d'avion (5) ;
le boîtier interne (9) étant formé mobile asservi autour d'un point de pivotement (15) mobile entre deux positions terminales ;
le compartiment à bagages étant réalisé pour être disposé au-dessus d'une rangée de sièges (3) dans une cabine des passagers (1) d'un avion ou d'un véhicule et pour être fixé à une structure de type cadre (8) ;
le boîtier interne (9) est intégré dans le boîtier externe (7) ; et
deux roues dentées (11a, 11b) ;
**caractérisé par le fait que** les deux roues dentées (11a, 11b) sont disposées en diagonale décalées et reliées entre elles par une courroie (14) ;
les roues dentées (11a, 11b) étant réalisées pour le déplacement en rotation asservi au niveau de chaque face frontale (10) du boîtier interne (9) et s'engageant par complémentarité de forme dans deux guides de crémaillère (12a, 12b) en regard s'étendant entre eux sous forme d'arc qui sont intégrés dans des parois frontales (13) du boîtier externe (7).

2. Compartiment à bagages selon la revendication 1, un déplacement du boîtier interne (9) par rapport au boîtier externe (7) du compartiment à bagages (2) étant effectué avec un servomoteur (20) qui se trouve, par l'intermédiaire d'un renvoi angulaire (21), en liaison fonctionnelle avec un axe (22) qui relie deux roues dentées (11a) positionnées en correspondance sur les faces frontales (10) du boîtier interne (9).

3. Compartiment à bagages selon la revendication 2, le servomoteur (20) pouvant être commandé par l'intermédiaire d'un verrou d'actionnement (19) ou pouvant être désaccouplé pour un actionnement manuel du compartiment à bagages (2).

4. Compartiment à bagages selon la revendication 1, présentant en outre :
une cavité de poignée (18) formée au niveau du boîtier interne destinée à l'ouverture et à la fermeture du boîtier interne (9).

5. Compartiment à bagages selon une des revendications 1 à 4,
le boîtier interne (9) du compartiment à bagages (2) étant conçu en un seul tenant et présentant un profil de section transversale de forme rectangulaire ;
le boîtier interne (9) formant, à l'exception d'une ouverture d'accès (16), un espace fermé pour le logement des bagages pouvant pivoter dans une position verticale à partir d'une position horizontale ouverte ;
le bagage se déplaçant sur une portion du boîtier interne (9) formant un dispositif de déversement.

6. Compartiment à bagages selon l'une des revendications 1 à 5,
le compartiment à bagages (2) pouvant être complètement intégré, en position terminale fermée, dans un espace intermédiaire (4) d'un fuselage d'avion (5), de telle sorte que le compartiment à bagages peut être visuellement incorporé dans un revêtement intérieur (6) de la cabine des passagers (1) ;
un fond (17) du boîtier interne (9) pouvant former une découpe prévue pour le compartiment à bagages (2) dans le revêtement intérieur (6), le fond pouvant être adapté à un modelage ou à un coloris du revêtement intérieur (6) ou pouvant être conçu de manière différente.

7. Compartiment à bagages selon l'une des revendications 1 à 6, présentant en outre : un assemblage à encliquetage par complémentarité de forme ou mécanique, par lequel le boîtier externe (7) est arrimé de manière amovible avec la structure (8) solidaire dans la zone du fuselage de l'avion (5).

8. Compartiment à bagages selon l'une des revendications 1 à 7,
le boîtier externe (7) ou le boîtier interne du compartiment à bagages (2) étant fabriqué à partir d'un matériau composite comme le PRFV (plastique à renfort fibre de verre) ou le PRFC (plastique à renfort fibre de carbone) et la structure du fond (17) du boîtier interne (9) pouvant comprendre, pour sa rigidification, différentes couches de revêtement constituées d'un matériau composite, entre lesquelles est introduit un noyau d'alvéoles.

9. Compartiment à bagages selon l'une des revendications 3 ou 4, présentant en outre :
au moins un verrou à actionnement automatique ;
le boîtier interne (9), en position fermée du compartiment à bagages (2), étant sécurisé avec au moins un verrou à actionnement automatique, qui peut être déclenché au moyen de la cavité de poignée (18) ou du verrou d'actionnement (19) pour le servomoteur (20).

10. Compartiment à bagages selon l'une des revendications 1 à 9, présentant en outre :
un système de rails ;
le système de rails pouvant être disposé dans la structure (8) solidaire du fuselage d'avion (5) et pouvant être guidé coulissant au-dessus du compartiment à bagages (2) et être fixé individuellement par rapport à une rangée de sièges (3) pour passagers.

11. Avion doté d'un compartiment à bagages selon l'une des revendications 1 à 10.

12. Procédé de disposition et de montage d'un dispositif pivotant destiné à recevoir des bagages dans une cabine des passagers d'un avion disposé au-dessus d'une rangée de sièges (3) dans une cabine des passagers (1) d'un avion et comprenant un boîtier externe (7) et un boîtier interne (9), le procédé présentant les étapes suivantes :
- montage du boîtier interne (9) avec un servomoteur (20), qui est affecté à un axe (22) par l'intermédiaire d'un renvoi angulaire (21), et l'axe (22) raccordant deux roues dentées (11a, 11b) en regard positionnées au niveau des faces frontales (10) du boîtier interne (9) ;
- assemblage du boîtier interne (9) dans le boîtier externe (7), les roues dentées (11a, 11b) du boîtier interne (9) s'engageant dans des guides de crémaillère (12a, 12b) du boîtier externe (7) pour le déplacement asservi ;
- positionnement du compartiment à bagages (2) par rapport à une rangée de sièges (3) pour passagers ;
- arrimage et fixation du boîtier externe (7) du compartiment à bagages (2) sur une structure (8) solidaire du fuselage de l'avion (5).
